# EUROPEAN PATENT SPECIFICATION

(11) **EP 4 295 722 B1**
(45) Date of publication and mention of the grant of the patent: **18.02.2026**
(21) Application number: 23180882.5
(22) Date of filing: 22.06.2023
(51) Int. Cl.: A43B 13/04, A43B 1/00, A43B 1/02, A43B 13/02, A43B 13/12, A43B 13/22, B29D 35/14, C08J 3/20, C08J 5/18

(54) **COMPOUND FOR OBTAINING SOLES FOR FOOTWEAR**
MISCHUNG ZUR HERSTELLUNG VON SCHUHSOHLEN
COMPOSÉ POUR L'OBTENTION DE SEMELLES POUR CHAUSSURES

(30) Priority: 22.06.2022 IT 202200013177
(43) Date of publication of application: 27.12.2023
(73) Proprietor: JV International S.r.l., 20122 Milano (IT)
(72) Inventor: MERLO, Ambrogio, 22063 Cantù (Como) (IT)
(74) Representative: Feltrinelli, Secondo Andrea

(56) References cited:
- KR-B1- 102 234 278
- US-A1- 2019 315 949
- US-A1- 2021 139 676

## Description

### TECHNICAL FIELD OF THE INVENTION

The present invention relates to a compound for obtaining soles for footwear, as well as a sole obtained starting from this compound.

### STATE OF THE PRIOR ART

The soles are usually obtained from rubber compounds.

However, most of the soles produced up to now have a high content of raw materials of unsustainable fossil origin and with a non-negligible environmental impact.

US2019315949A1, KR102234278B1 and US2021139676A1 describe respective solutions according to the state of the prior art.

### OBJECTS OF THE INVENTION

An object of the present invention is to provide a compound for obtaining soles for footwear, as well as a sole obtained starting from this compound.

Another object of the present invention is to provide a compound as indicated above which is of biological origin or derivation.

Another object of the present invention is to provide a compound for obtaining soles which is eco-sustainable.

According to one aspect of the invention, a compound according to claim 1 is provided.

According to another aspect of the invention a sole according to claim 11 and an article of footwear according to claim 13 are provided.

The dependent claims refer to preferred and advantageous embodiments of the invention.

### EMBODIMENTS OF THE INVENTION

To correctly construe the expression of biological origin or derivation (biobased), it should be noted that for the assessment of the biological origin of products, reference is made to:
- the content of biological origin (biomass), or
- the carbon content of biological origin.

The method based on the "carbon content of biological origin or organic carbon" focuses on the origin of the carbon and has two variants, depending on whether only organic carbon (TOC) or all carbon (organic and inorganic) (TC) is taken into account.

The present invention relates to a compound for obtaining a sole for footwear comprising:
- a content of carbon with biological or organic origin (TOC) greater than 54%,
- a content of total carbon (TC) not derived from petroleum or anyway from hydrocarbons greater than 60%, said compound comprising a polymeric base and a filler, said polymeric base comprising natural rubber in a percentage by weight of the compound higher than at least 45%, whereas said filler includes silica of biological origin or derivation in a percentage by weight of the compound among 15% and 35%, wherein said polymeric base comprises: polymers derived from the processing of rice, corn and/or sugar cane, and/or natural rubber in a percentage by weight of the compound among 45% and 70%.

Various standard methods can be used to determine the carbon content, e.g. ASTM D6866, EN 16640.

With regard to this aspect, a compound for obtaining a sole usually includes:
- at least one polymeric component, both of natural and synthetic origin,
- at least one filler, such as carbon black, crystalline silica, talc, calcium,
- at least one accelerating and/or vulcanizing agent, for example sulfur or peroxide,
- optionally at least one process oil, normally lubricants, paraffin oils, white oils, usually petroleum-derived which facilitate lubrication and for machining,
- optionally, additive or accessory agents, such as pigments, antioxidants, zinc oxide, anti-UV rays, which are added to improve specific characteristics.

A compound according to the present invention comprises at least one polymeric component or a polymeric base, at least one filler, at least one accelerating and/or vulcanizing agent and optionally at least one process oil and/or additive or accessory agents, but for each of these families or groups, only or mainly components of natural origin are provided, so as to comply with the conditions for the carbon content indicated above.

More specifically, in a compound according to the present invention, instead of synthetic polymers, including butyl, nitrile and SBR rubbers, polymers of vegetable origin are provided, such as natural rubbers (obtained from the rubber tree and/or guayole and/or dandelions, etc.), biobased polymers derived from the processing of rice, corn and/or sugar cane.

Advantageously, the polymeric base or the polymer or the mixture of polymers is provided as a percentage by weight of the mixture higher than at least 45% or 50%, if desired between 45% and 70% or between 50 and 70% or more, and comprises or consists of natural rubber and/or rubber of biological and/or vegetable origin derived for example from the processing of corn, rice and/or sugar cane.

With regard to the family or group of fillers, in a compound according to the present invention only or mainly fillers of biological origin are used, for example derived from the processing of rice, corn, bamboo, hemp and/or coconuts, for example silica of biological origin or derivation (biobased).

The compound comprises a filler in a percentage by weight of the compound between 15% and 35% and comprises or consists of silica of biological origin or derivation, if desired precipitated, which can be obtained, if desired, from rice husks.

With reference then to the family of accelerating and curing agents, in a compound according to the present invention the accelerators of petroleum origin are wholly or partially eliminated and those of inorganic origin are kept and added.

If desired, the compound comprises accelerators and vulcanizing agents in a percentage by weight of between 0.5% and 3% of the compound and comprises or consists for example of biological or inorganic sulfur, a polyethylene glycol (PEG) based activator or peroxide-based activator.

The compound may include lubricants in percentage by weight between 1% and 12% of the compound, for example zinc stearate, which is in the form of a solid powder and is intended to improve lubrication.

With reference to the process oil, if provided, rapeseed oil, palm oil, seed oil derived from corn, coconut or other natural sources and not of petroleum origin are as an example used.

Considering then the additive or accessory agents, in a compound according to the present invention, the dyes of petroleum origin can be replaced with dyes of animal or vegetable origin. The additives or accessories, if foreseen, are present in a percentage by weight between 0.5% and 5%.

A coupling agent belonging to the family of silanes, for example an organosilane containing sulphur, can also be included in the compound. This optional agent is present in the compound in a suitable percentage by weight with respect to the weight of the compound, for example between 0.5% and 7%, if desired between 3% and 5%.

Preferably, a compound according to the present invention comprises:
- natural rubber in a percentage by weight with respect to the weight of the compound between 45 and 70%, if desired between 45% and 60%, for example about 45-50% or 56-58%,
- silica of biological origin or derivation in a percentage by weight with respect to the weight of the compound between 25% and 35%, if desired about 29-31%,
- if desired, additive or accessory agents, such as pigments, antioxidants, zinc oxide, anti-UV rays in a percentage by weight with respect to the weight of the compound between 4% and 8%, for example between 5% and 6%, and

if desired, a coupling agent belonging to the family of silanes in a percentage by weight with respect to the weight of the compound between 0.5% and 7%, if desired between 3% and 5%, and
optionally other elements in a percentage by weight with respect to the weight of the compound between 0.1 and 1.5% or between 0.1 and 1.1%, for example one or more accelerating agents, sulphur, coloring pigments, etc.

A compound according to the present invention can be obtained with any suitable method.

Thus, for example, a first step of mixing the components can be envisaged, without any accelerators and pigments, thus mixing the polymers, fillers and lubricating oils in a closed mixer with temperature control in two stages: initially, before adding the fillers, the temperature must not exceed 100°C and then, after adding the lubricants and fillers, with a maximum temperature of about 130°C.

Subsequently, a final mixing step is carried out in an open mixer, for about 10-20 minutes, during which the mixture is homogenized and then any additives and accelerators are added. During this step the temperature can be around 50°C/60°C.

The subject-matter of the present invention is also a sole for footwear obtained by molding a compound as indicated above.

A compound after vulcanization according to the present invention can have the following physical properties:
Hardness: ASTM D2240 Shore A between 50 and 85
Tensile strength: ASTM D412 - KG/CM2 - 150 min
Abrasion resistance: ASTM D5963 - MM3 - 250 max

By vulcanizing a compound one can obtain soles for footwear owing to molding.

Subject-matter of the present invention is also a shoe provided with a sole as aforesaid.

If desired, the shoe comprises a portion of upper or an upper constrained or connected to the sole or in one piece with the latter.

Modifications and variations of the invention are possible within the scope defined by the claims.

## Claims

1. Compound for obtaining a sole for footwear comprising:
- a content of carbon with biological or organic origin greater than 54%,
- a content of carbon not derived from hydrocarbons greater than 60%,
said compound comprising a polymeric base and a filler,
said polymeric base comprising natural rubber in a percentage by weight of the compound higher than at least 45%, whereas said filler includes silica of biological origin or derivation in a percentage by weight of the compound between 15% and 35%,
wherein said polymeric base comprises:
polymers derived from the processing of rice, corn and/or sugar cane, and/or natural rubber in a percentage by weight of the compound between 45% and 70%.

2. Compound according to claim 1, wherein said silica of biological origin or derivation (biobased) is obtained from the processing of corn and/or sugar cane.

3. Compound according to claim 1 or 2, wherein said silica of biological origin or derivation is obtained from rice hulls.

4. Compound according to any previous claim, wherein said natural rubber is obtained from the rubber tree and/or guayole and/or dandelions.

5. Compound according to any previous claim, comprising accelerators and vulcanizers in a percentage by weight between 0.5% and 3% of the compound and comprises or consists for example of biological or inorganic sulfur, a polyethylene glycol based activator or a peroxide based activator.

6. Compound according to any previous claim, comprising lubricants in percentage by weight between 1% and 12% of the compound, including or consisting of zinc stearate.

7. Compound according to any one of the preceding claims, comprising a coupling agent belonging to the family of silanes.

8. Compound according to claim 7, wherein said coupling agent belonging to the family of silanes is present in a percentage by weight with respect to the weight of the compound between 0.5% and 7%.

9. Compound according to any one of the preceding claims, comprising process oil selected from rapeseed, palm, seed oil derived from corn, coconut or other natural sources and not of petroleum origin.

10. Compound according to any one of the preceding claims, comprising:
- natural rubber in a percentage by weight with respect to the weight of the compound between 45 and 70%,
- silica of biological origin present in a percentage by weight with respect to the weight of the compound between 25% and 35%.

11. Sole for footwear obtained by molding a compound according to any one of the preceding claims.

12. Sole according to claim 11, having the following physical properties:
Hardness: ASTM D2240 Shore A between 50 and 85
Tensile strength: ASTM D412 - KG / CM2 - 150 min
Abrasion resistance: ASTM D5963 - MM3 - 250 max

13. Footwear provided with a sole according to claim 11 or 12.

## Patentansprüche

1. Verbindung zur Erhaltung einer Sohle für Schuhwerk, umfassend:
- einen Gehalt an Kohlenstoff biologischen oder organischen Ursprungs von mehr als 54 %,
- einen Gehalt an nicht aus Kohlenwasserstoffen stammendem Kohlenstoff von mehr als 60 %,
wobei die besagte Verbindung eine polymere Basis und einen Füllstoff umfasst,
wobei die besagte polymere Basis Naturkautschuk in einem Gewichtsprozentsatz der Verbindung von über mindestens 45 % umfasst, während der Füllstoff Siliciumdioxid biologischen Ursprungs oder biologischer Derivation in einem Gewichtsprozentsatz der Verbindung zwischen 15 % und 35 % enthält,
worin die besagte polymere Basis umfasst:
Polymere aus der Verarbeitung von Reis, Mais und/oder Zuckerrohr, und/oder Naturkautschuk in einem Gewichtsprozentsatz der Verbindung zwischen 45 % und 70 %.

2. Verbindung nach Anspruch 1, worin das besagte Siliciumdioxid biologischen Ursprungs oder biologischer Derivation (biobasiert) aus der Verarbeitung von Mais und/oder Zuckerrohr gewonnen wird.

3. Verbindung nach Anspruch 1 oder 2, worin das besagte Siliciumdioxid biologischen Ursprungs oder biologischer Derivation aus Reishülsen gewonnen wird.

4. Verbindung nach irgendeinem vorangegangenen Anspruch, worin der besagte Naturkautschuk aus dem Kautschukbaum und/oder Guayule und/oder Löwenzahn gewonnen wird.

5. Verbindung nach irgendeinem vorangegangenen Anspruch, die Beschleuniger und Vulkanisatoren in einem Gewichtsprozentsatz zwischen 0,5 % und 3 % der Verbindung umfasst und beispielsweise biologischen oder anorganischen Schwefel, einen Aktivator auf Polyethylenglykolbasis oder einen Aktivator auf Peroxidbasis umfasst oder daraus besteht.

6. Verbindung nach irgendeinem vorangegangenen Anspruch, die Schmiermittel in Gewichtsprozenten zwischen 1 % und 12 % der Verbindung, enthaltend oder bestehend aus Zinkstearat, umfasst.

7. Verbindung nach irgendeinem der vorangegangenen Ansprüche, die einen Haftvermittler aus der Familie der Silane umfasst.

8. Verbindung nach Anspruch 7, worin der besagte zur Familie der Silane gehörende Haftvermittler in einem Gewichtsprozentsatz in Bezug auf die Verbindung zwischen 0,5 % und 7 % vorhanden ist.

9. Verbindung nach irgendeinem der vorangegangenen Ansprüche, die ein Prozessöl umfasst, das aus Rapssamen, Palme, aus Mais gewonnenem Samenöl, Kokosnuss oder anderen natürlichen Quellen ausgewählt ist und keinen Erdöl-Ursprung hat.

10. Verbindung nach irgendeinem der vorangegangenen Ansprüche, umfassend:
- Naturkautschuk in einem Gewichtsprozentsatz in Bezug auf das Gewicht der Verbindung zwischen 45 und 70 %,
- Siliciumdioxid biologischen Ursprungs, das in einem Gewichtsprozentsatz in Bezug auf das Gewicht der Verbindung zwischen 25 % und 35 % vorhanden ist.

11. Sohle für Schuhwerk, erhalten durch Formen einer Verbindung nach irgendeinem der vorangegangenen Ansprüche.

12. Sohle nach Anspruch 11 mit den folgenden physikalischen Eigenschaften:
Härte: ASTM D2240 Shore A zwischen 50 und 85
Zugfestigkeit: ASTM D412 - KG / CM2 - 150 min
Abriebfestigkeit: ASTM D5963 - MM3 - 250 max

13. Schuhwerk, versehen mit einer Sohle nach den Ansprüchen 11 oder 12.

## Revendications

1. Composé pour obtenir une semelle pour chaussures comprenant :
- une teneur en carbone d'origine biologique ou organique supérieure à 54 %,
- une teneur en carbone non dérivée d'hydrocarbures supérieure à 60 %,
ledit composé comprenant une base polymérique et un produit de remplissage,
ladite base polymérique comprenant du caoutchouc naturel en pourcentage en poids du composé supérieur à au moins 45 %, tandis que ledit produit de remplissage inclut de la silice d'origine ou dérivation biologique en pourcentage en poids du composé entre 15 % et 35 %,
dans lequel ladite base polymérique comprend :
des polymères dérivés du traitement du riz, du maïs et/ou de la canne à sucre, et/ou du caoutchouc naturel en pourcentage en poids du composé compris entre 45 % et 70 %.

2. Composé selon la revendication 1, dans lequel ladite silice d'origine ou dérivation biologique (biobase) est obtenue par le traitement du maïs et/ou de la canne à sucre.

3. Composé selon la revendication 1 ou 2, dans lequel ladite silice d'origine ou dérivation biologique est obtenue à partir de coques de riz.

4. Composé selon l'une des revendications précédentes, dans lequel ledit caoutchouc naturel est obtenu à partir d'hévéa et/ou de guayule et/ou de pissenlits.

5. Composé selon l'une des revendications précédentes, comprenant des accélérateurs et des vulcanisateurs en pourcentage en poids compris entre 0,5 % et 3 % du composé et comprend ou consiste par exemple en soufre biologique ou inorganique, un activateur à base de polyéthylène glycol ou un activateur à base de peroxyde.

6. Composé selon l'une des revendications précédentes, composé de lubrifiants en pourcentage de poids compris entre 1 % et 12 % du composé, incluant ou composé de stéarate de zinc.

7. Composé selon l'une quelconque des revendications précédentes, comprenant un agent de couplage appartenant à la famille des silanes.

8. Composé selon la revendication 7, dans lequel ledit agent de couplage appartenant à la famille des silanes est présent en pourcentage en poids par rapport au composé entre 0,5 % et 7 %.

9. Composé selon l'une quelconque des revendications précédentes, comprenant de l'huile de procédé sélectionnée à partir de colza, palme, huile de graine dérivée du maïs, de la noix de coco ou d'autres sources naturelles et non d'origine pétrolière.

10. Composé selon l'une quelconque des revendications précédentes, comprenant :
- du caoutchouc naturel en pourcentage en poids par rapport au poids du composé compris entre 45 % et 70 %,
- la présence de silice d'origine biologique en pourcentage en poids par rapport au poids du composé comprise entre 25 % et 35 %.

11. Semelle pour chaussures obtenue en moulant un composé selon l'une quelconque des revendications précédentes.

12. Semelle selon la revendication 11, possédant les propriétés physiques suivantes :
Dureté : ASTM D2240 Shore A entre 50 et 85
Résistance à la traction : ASTM D412 - KG/CM2 - 150 min
Résistance à l'abrasion : ASTM D5963 - MM3 - 250 max

13. Chaussure dotée d'une semelle selon la revendication 11 ou **12.**
